**Europäisches Patentamt**

**European Patent Office**

**Office européen des brevets**

(19)

(11) Publication number : **0 367 169 B1**

(12)

# EUROPEAN PATENT SPECIFICATION

(45) Date of publication of patent specification :
**02.12.92 Bulletin 92/49**

(51) Int. Cl.⁵ : **F16B 2/08, F16L 33/04**

(21) Application number : **89120076.8**

(22) Date of filing : **30.10.89**

(54) **Improvements in the construction of clamps with locking screw.**

(30) Priority : **03.11.88 ES 8803895**
**10.02.89 ES 8900808**

(43) Date of publication of application :
**09.05.90 Bulletin 90/19**

(45) Publication of the grant of the patent :
**02.12.92 Bulletin 92/49**

(84) Designated Contracting States :
**AT BE CH DE FR GB GR IT LI LU NL SE**

(56) References cited :
**EP-A- 0 286 561**

(56) References cited :
**DD-A- 259 435**
**DE-A- 3 207 858**
**DE-A- 3 421 378**
**US-A- 4 521 940**

(73) Proprietor : **MIKALOR, S.A.**
**Paseo Can feu, 60-66**
**E-08205 Sabadell (Barcelona) (ES)**

(72) Inventor : **Palau Dominguez, Ramon**
**Villadelprat, 3, E-08190**
**Sant Cugat Del Valles (Barcelona) (ES)**

(74) Representative : **Canela Bresco, Arturo**
**Gabinete Canela, Calle Aragon 346, pral. B**
**E-08009 Barcelona (ES)**

EP 0 367 169 B1

## Description

The invention refers to some improvements in the construction of clamps with locking screw and particularly relates to a hose clamp according to the preamble of claim 1.

This type of clamp is already known (US-A-4.521.940) and it has the problem of several friction points which cause a reduction in the tightening property of the clamp.

Moreover, these clamps which are already known do not permit their nuts to be tightened by automatic wrenches, which means that it is impossible for their assembly to be automated.

Another problem presented by the use this known type of clamp is that because of the unscrewed stage, the nut often accidentally comes off the end of the screw onto which it is fitted and is lost.

Another disadvantage of current clamps is that they are very heavy in relation to their size, which means they are difficult to use for certain applications.

On account of these problems with the clamps existing on the market, manufacturers are constantly working to improve them and to try to solve some of the inconveniences; these improvements, however, are very difficult to achieve in view of the constructional simplicity of the clamps and the job they have to perform.

Thanks to the improvements which are the subject of this Patent, the above-mentioned problems have been solved and moreover further advantages have been achieved, which will be elaborated on in this description.

By other hand, the clamps formed by a strip rolled over itself with locking screw, which clamps currently exist on the market, have the problem that between one end with transversal loop of the clamp placed around the tube to be tightened and the other end also with transversal loop, there is an uncovered space so without the tightening action in a direction perpendicular to the curve of the flexible tube in that area, when the clamp is gradually closed by the advance of the locking screw and its two looped ends draw closer to each other in a curved advancing movement.

During this curved advance, the clamp is gradually closed and consequently it tightens in a radial direction against the external walls of the flexible tube and with a constraining action.

This annular constraining action does not occur without a break in continuity, since it is interrupted in open space between the two ends of the clamp forming a ring, and since there is no perpendicular pressure on this space, the wall of the flexible tube being clamped is pinched between the two ends of the clamp, because the circular wall of the flexible tube is constrained around all nearly all of it circumference and firmly secured by the clamp, but this does not occur on the part of the wall of the flexible tube which receives no perpendicular pressure and which nevertheless sustains a pushing pressure in a transversal and curved direction; the flexible material in that area is therefore raised, since it tends to escape through the free space between the two ends of the clamp because of the annular pressure exerted on the edges of the area without radial pressure.

To avoid this negative pinching effect, there is currently a rigid extension tab, with no joint, at the bottom of one of the clamp's ends.

This rigid extension tab reduces the problem described above, since it creates a bridge which exerts pressure on the space without pulling between the two ends of the clamp.

However, as stated above, the advance of one end of the clamps towards the other is not straight but curved, and the extension tab is rigid and not jointed, so this tab which is already known cannot adapt to the curve of the flexible tube, and the advance of the extension tab is totally rigid, without variation of its position in relation to the point of origin of the extension, which is one of the ends of the clamp.

Naturally the extension tab is curved so that it can adapt as best as possible to the tube wall. However, the projecting end of the extension tab, for this very reason, has the problem that the projecting end of the curved extension tab always tends to insert itself at a point located below the level of the end from which it originates.

When the two ends of the clamp draw close together as it tightens on the elastic tube, this point tends to sink into the external elastic wall of the tube, producing at this point a strong abrasive pressure which forces the surrounding areas to distend to compensate for the lack of distension at the point near where the sinking of the point occurs. As a result, not only is the elastic wall of the tube being clamped damaged by the friction, but wrinkles are produced in the elastic wall of the tube for a reason other than those caused by the absence of the extension tab.

The problem caused by the fact that the extension tab is rigid, without an articulation, is overcome by the subject-matter of claim 1, which allows the extension tab arrangement to be articulated.

In this way, when the two ends of the clamp advance in a curve towards each other, the extension tab also does so, and is able to continuously change angular position in relation to the end from which it originates, so adapting itself automatically at all times to the changes of position it has to adopt in order to achieve a perfect connection to the body of the elastic tube being clamped, without creating lifting tensions in the elastic tube's curved wall, wrinkles or simply deformations, thus achieving an effect of perfect constraint. Claims 2 to 6 relate to preferred embodiments of the subject-matter of claim 1.

To ensure correct interpretation, a case of implementation of the said improvements is described below by way of example, which is not limiting; 3 pages of drawings are attached in which:

Figure 1 shows a perspective view of the clamp constructed with two equal new loops and without the extension tab or bridging element for a better understanding of the shape of the clamp loops, when both are equal. The clamp is open with the locking screw aligned, all in accordance with those improvements.

Figure 2 gives a detail view of the ends of the clamp of Figure 1, with the locking screw fitted and partially screwed in.

Figure 3 shows plan and side views of the nut.

Figure 4 shows a detail of the ends of a metal strip with a new loop, being the opposite of known type but with articulated means for the extension tab or bridging element to obtain simultaneously the advantages of the two loops of different type, unrolled up, with plan view and the corresponding side view.

Figure 5 shows a clamp constructed in accordance with these improvements, representing by dots the articulated bridge piece raised.

Figure 6 shows a cross section of Figure 1 with reference to the pivoting articulation of the projection on each of the two parallel side bars of the bridge piece with the relevant recess of the edges of the ends of the bushing tube.

Figure 7 illustrates the connection of the articulated bridge piece via holes in its side bars into which the journal projections from the edges of the bushing tube are inserted, in pivoting fashion.

Figure 8 shows the connection of the articulated bridge piece via supported projecting claws, which fit into, are seated in and pivot in recesses in the edge of the two bases of the bushing tube.

Figure 9 gives a detail view, on a large scale, of the articulated connection between bridge piece and bushing tube, in accordance with the above figure.

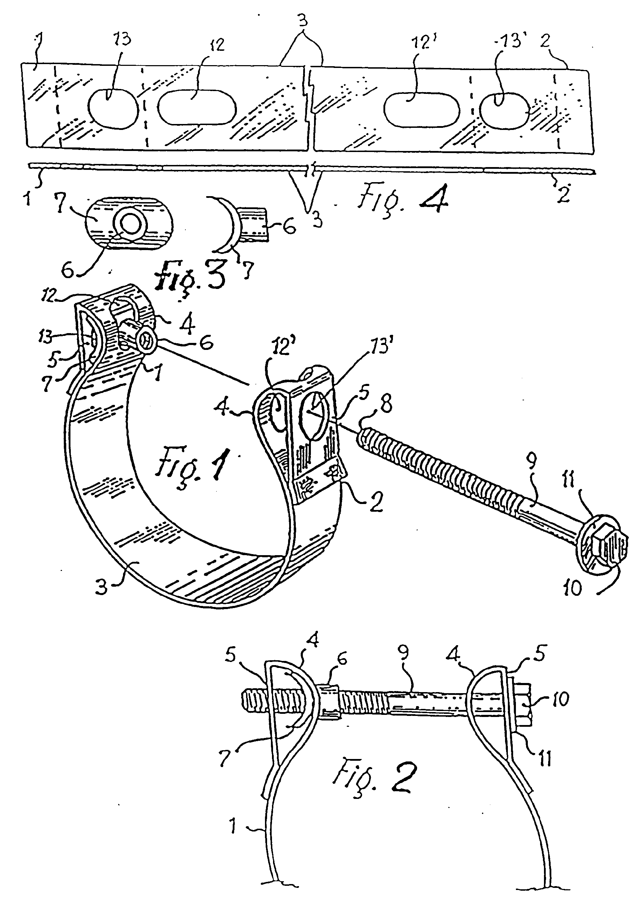

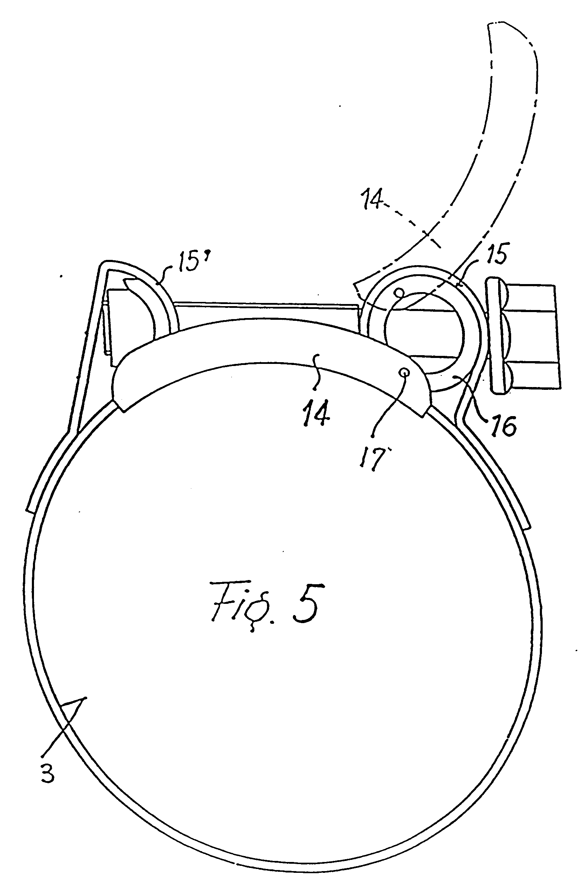

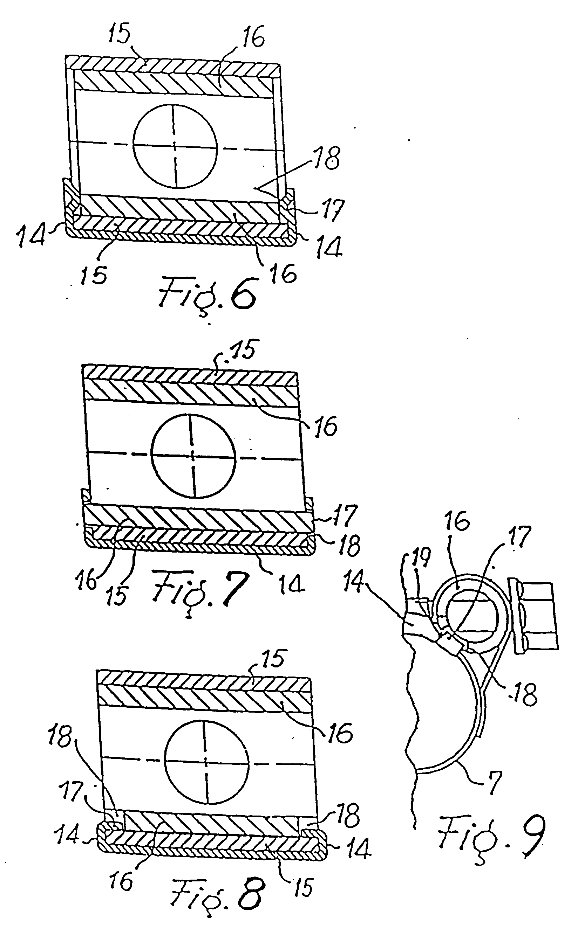

The invention refers to some improvements made to the construction of clamps with locking screw of the type consisting of a metal strip doubled over itself, each end of which has a cylindrical loop obtained by doubling over the said end; each cylindrical loop houses and retains by friction a bush which can rotate in its position and has radial openings.

The bush in the loop at one end of the metal strip has the seating for the anchorage of the locking screw head, and the other bush in the opposite loop of the said metal strip is where the tip of the locking screw, static, is inserted. The tip of the screw which projects out of the corresponding loop and bush through which it is inserted is equipped with a flange-washer against which the locknut rests and is supported. The screw thus positioned does not turn; it remains still, and the nut advances along the said screw by turning until it homes against the flange-washer, the rim of whose uncovered mouth rests against the back of its respective loop on the end of the metal strip.

Since the screw head is anchored in the bush, when the nut is screwed on, the latter advances and pulls, as a reaction, the head of the non-turning screw anchored in the radial openings of its loop and bush which, since it cannot escape, remains still while the loop where the flange-washer of the opposite end of the metal strip rests, is pushed forwards in a distinct curve to meet the opposite loop and so gradually and progressively closes the mouth of the clamp in a curve.

The anchored screw head can oscillate in its position when stressed by the change in angle of the end of the metal strip during its curved forward and backward movements because it is anchored to the loop's oscillating internal bush; if it were statically connected, negative constraints would be caused by the curved advance of one end of the strip towards the other.

This type of clamp is already known and its applicant, the company Mikalor, S.A., is the holder of Spanish Utility Model No. 276.858/5 for "Improved Clamp", applied for on January 16, 1986, referring to this type. Clamps of the same type than the one of the said Spanish Utility Model No. 276.858/5 are also registered under Patents EP-A-286.561 of Pont-A-Mussons, S.A. and US-A 4.521.940 Oeticker. Both have the same inconvenients than the one of the said Spanish Utility Model No. 276.858/5.

Furthermore, the clamp constructed according to the object of the cited Patent US-A 4.521.940 has also the inconvenient that the body of the said clamp is very weak due to the fact that the clamp is made by means of assembling two different thin sectors, always being both loops equal, which shape do not allow the possibility of being tightened by an additional reaction caused by automatic wrenches. Such constructive weakness obliges the loops to be provided with reinforcements and a special spring to be disposed, so that the screw is pushed against the nut and therefore avoiding its head to escape from its loop.

With the improvements of this application, new clamps of the type described above are obtained, which offer the following advantages:

1. Because of its constructional arrangement, its performance is increased as a result of the oscillating tightening of the clamp and the elimination to a large extent of the friction points which exist on current clamps.

2. Clamps constructed in accordance with these improvements permit the possibility of their being tightened by automatic wrenches, which means that their assembly can be automated.

3. The locknut cannot be lost, since it is seated and captive retained and cannot accidentally come off the end of the locking screw inside the irregular loop, so when the nut is fully slackened and the tip of the screw is freed, the nut remains in position and cannot be lost; thus clamps made in accordance with these improvements are easier to assemble.

The use of the clamp is guaranteed, including tightening it to smaller diameters than its initial diameter, provided these are within the clamp's normal working range, since the clamp's new body, in accordance with the new constructional arrangement, prevents any damage occurring to the spiral threads of both nut and screw.

Furthermore, because of its constructional arrangement, the cylinder-shafts fitted inside each of the loops formed out of the ends of the clamp are eliminated.

Another considerable advantage over clamps of the same type currently on the market is the small tightening area on clamps so constructed, owing to the elimination of the friction points, which is achieved by their new constructional arrangement.

This new constructional arrangement enables the screw to be joined to the clamp by its tip, which is inserted through the elongated orifice of the rear straight part of the irregular loop on the opposite side of the rolled metal strip, passes through the facing elongated orifice in the curved part, advances by turning and is inserted through the slot in the curved part of the opposite end of the metal strip; it is screwed into the metal nut housed inside the irregular loop, is screwed through it and emerges through the rear elongated orifice in the non-curved part of the irregular loop. The screw head thus remains projecting and supported by the edge of the elongated orifice of the external surface of the rear non-curved part of the other loop, and so its flange is retained and cannot be lost inside the chamber formed by the non-curved, distinctly straight, part and the curved part of the corresponding loop; meanwhile, because of its curved flange, the nut can slide by oscillation, resting against the inner curved side of the ring of its irregular loop and follow the side movements of the screw when the ends of the clamp gradually draw closer together in a curve in consequence of the tightening of the screw head.

When the two loops at the two ends of the metal strip are both irregular, inside the loop used for supporting the screw head, the inner core will match the shape of the curved part of the irregular loop.

The clamp with locking screw consists of a metal strip rolled over itself with the ends doubled over to form a cylindrical loop which houses a bush of the same shape and slightly smaller in size so that it can be held simply by friction; the bush can oscillate in its position inside the cylindrical loop, and one of them in turn holds, by anchoring, the head of the locking screw; there are elongated orifices in the bodies of the cylindrical loops and inner cylindrical bushes to anchor the screw head at one end and to allow the screw tip to emerge at the other end; the cylindrical loop of one of the ends 1 and 2 of the metal strip 3 is of irregular shape with one part doubled over in a curve 4 and the other part 5, not curved, faces backwards, straightly, until it joins the back of the metal strip 3 and inside one of these irregular doubled sections there is the nut 6 with curved flange 7, for tightening the assembly, which flange 7 is in turn bent with diameter and curve matching the curve of the curved part 4 of the irregular loop in which it is contained, while the central cylindrical part 6 of the nut emerges, when so appropriate, through the elongated orifice 12 in the wall of the curved part 4 to receive the tip 8 of the locking screw 9 whose head 10 with flange 11, situated outside the opposite loop, rests on the external wall of the same.

The elongated orifices 12 and 12' and 13 and 13' are the same on both loops at the ends 1 and 2 of the metal strip 3.

When the clamps with locking screw are of the type that they have a bridging element 14 at one end of the clamp, then the said bridging element 14 is connected to an end loop 15 of the clamp in a free articulated form, became at two opposite points of the edge of the sides of the tube 16 inserted in the loop 15 of the relevant end of the clamp, there are in the same surface of it some pivot pins 17 or holes 18 comprising when desired, a perforated bottom, which match other recesses or projections done in the surface of the bridging element 14 located between the two ends 15 and 15' so that the curved bridging element 14 joined permanently to the end 15 where it is situated, adapts to the curve of the advance movement pivoting on the pivot pins 17 or lateral holes 18 which join it to the end 15 of the clamp 3 for embrace the wall of the elastic tube without negative pressures until it is located below the end 15', opposite which is attached by an articulation, while the bridging element 14 tightens in a perpendicular direction against the curved area of the tube on which it is situated.

One of the pivot pins 17 is near the end of the perpendicular bar, and consists of a perpendicular piece 19 which allows this area to be doubled back in the form of a claw 17 and which enters and fits into the corresponding hole 18 comprised in the edge of the bushing tube 13.

## Claims

1. A hose clamp comprising a metal strap (3) having first and second closed loops, each said first and second closed loops having a pair of inner and outer aligned slots (12 - 12' and 13 - 13'), said first closed having a curved section (4) joined by a substantially straight section (5) an end portion of said straight section being bonded to said strap to form said closed loop, a captive nut (6) frictionally mounted within said first loop, said captive nut comprising an elongated semicylindrical curved flange (7) the curvature of said flange (7) corresponding to the curvature of said curved section (4) within said first loop and abutting the internal curvature of said first loop, and tensioning means comprising a threaded bolt (9) passing through the aligned openings (12' - 13') of said second loop and threaded into said captive nut (6) whereby threading said bolt (9) in said captive nut (6) causes said captive nut (6) to pull said flange (7) and abutting curved section (4) of said first loop toward said second loop to tighten the clamp, characterized in that the captive nut (6) comprises a cylindrical tubular barrel with internal threads and a continuous circumference, said tubular barrel extending through said inner slot (12 -12'), and said flange (7) extending from an end portion of said tubular barrel, and in that there is provided an acute angle between said curved section (4) and said straight section (5).

2. A hose clamp according to claim 1, characterized in that said second closed loop is of the same construction as said first closed loop and has a second straight section (5), said threaded bolt (9) having a flanged member (7) abutting said second straight section (5) to tighten said clamp.

3. A hose clamp according to claim 1, characterized in that said second closed loop (15) is substantially circular in shape, a cylindrical bushing (16) rotatably mounted in said second closed loop, said bushing (16) having a pair of aligned holes (18) which can be placed in registration with said inner and outer aligned slots, a bridging element (14) extending across the space between said first and second closed loops, said bridging element (14) being pivotally mounted on said bushing (16) whereby when said threaded bolt (9) is passed through said aligned slots (12' - 13') in said second loop and said aligned holes in said bushing and threaded into said tubular barrel said loops are drawn together while said bridging element (14) shifts to arrive at a position to apply a radially inwardly directed pressure to the space surrounded by the clamp.

4. A hose clamp according to claim 3, characterized in that said bridging element (14) is arcuately shaped.

5. A hose clamp according to claim 4 characterized in that said bridging element (14) is pivotally mounted on said bushing (16) by means of pivot pins (17) extending from end portions of said bushing and entering holes (18) provided in said bridging element (14).

6. A hose clamp according to claim 4 characterized in that said bridging element (14) is pivotally mounted on said bushing by means of pivot indentations struck from side walls of said bridging channel member and entering holes in end portions of said bushing.

## Patentansprüche

1. Eine Schlauchschelle aus einem Metallband (3) mit zwei geschlossenen Laschen. Jede dieser geschlossenen Laschen hat zwei innere und äußere fluchtrechte Schlitze (12 - 12' und 13 - 13'). Die erste Lasche hat einen runden Teil (4), der in einen relativ geraden Teil (5) übergeht. Das Ende des geraden Teils ist an das Band angelegt, um die besagte geschlossene Lasche zu bilden. Eine Schraubenmutter (6) wird durch Reibung in dieser ersten Lasche festgehalten und hat ein rundes, längliches Kragenstück (7), dessen Krümmung der Krümmung und des genannten runden Teils (4) in der ersten Lasche entspricht und die an der inneren gekrümmten Wand der ersten Lasche anliegt. Weiterhin sind Elemente zum Züsammenziehen der Schlauchschelle vorhanden, nämlich eine eingeführte schraube (9), die durch die fluchtrechten Öffnungen (12' - 13') der zweiten Laschen gesteckt ist und in die genannte Mutter (6) mündet. Wenn die schraube (9) eingeführt ist, zieht die Mutter (6) anstoßend an den runden Teil (4) der ersten Lasche in Richtung auf die zweite Lasche am Kragenstück (7), um so die schlauchschelle zu schließen. Die Mutter (6) besteht aus einem zylindrischen Rohrstück mit Innengewinde und einem ununterbrochenem Umfang. Dieses Rohrstück kommt hervor durch den inneren Schlitz (12 - 12'). Das Kragenstück (7) kommt hervor aus einem Ende des Rohrstücks. Zwischen dem runden Teil (4) und dem geraden Teil (5) besteht ein spitzer Winkel.

2. Eine Schlauchschelle nach Patentanspruch 1, die sich dadurch auszeichnet, daß die zweite geschlossene Lasche genauso konstruiert ist wie die erste geschlossene Lasche und einen zweiten geraden Teil (5) aufweist. Auch sie verfügt über die genannte Gewindeschraube (9) und ein Kragenstück (7), das an den geraden Teil (5) anstößt, um die Schlauchschelle zu schließen.

3. Eine Schlauchschelle nach Patentanspruch 1, die sich dadurch auszeichnet, daß die zweite geschlossene Lasche (15) relativ rund ist. In sie ist ein sich um sich selbst drehendes Zylinderrohr (16) eingepaßt, welches zwei fluchtrechte Eintritte (18) aufweist, die den bereits erwähnten fluchtrechten Eintritten und Auskragungen entsprechen. Weiterhin gibt es ein Brückenstück (14), das den Abstand zwischen der ersten und zweiten geschlossenen Lasche überbrückt. Das Brückenstück (14) ist beweglich mit dem Zylinderrohr (16) verbunden, so daß die beiden Laschen beginnen, sich aufeinanderzu zu bewegen, sobald die Gewindeschraube (9) durch die fluchtrechten Öffnungen (12' - 13') in der zweiten Lasche und durch die fluchtrechten Öffnungen des Zylinderrohrs eingeführt wird und in das Rohrstück geschraubt wird. Das Brückenstück (14) pivotiert gleichzeitig, bis es eine Stellung erreicht, in der es senkrechten Druck auf den gebogenen Bereich des Schlauches in der Schelle ausübt.

4. Eine Schlauchschelle nach Patentanspruch 3, die sich dadurch auszeichnet, daß das Brückenstück (14) eine gebogene Form hat.

5. Eine Schlauchschelle nach Patentanspruch 4, die sich dadurch auszeichnet, daß das Brückenstück (14) mithilfe von in ihm befindlichen Öffnungen (18) und der Zapfen (17) an den Enden des Zylinderrohrs (16) beweglich am Zylinderrohr befestigt ist.

6. Eine Schlauchschelle nach Patentanspruch 4, die sich dadurch auszeichnet, daß das Brückenstück (14) mithilfe von Pivotstiften, die von seinen Seiten abstehen und der Eintrittsöffnungen an den Enden des Zylinderrohrs (16) beweglich am Zylinderrohr befestigt ist.

## Revendications

1. Un collier qui comprend une bande métallique (3) avec une première et seconde boucles fermées, chacune de ces boucles fermées ayant une paire de rainures intérieures et extérieures alignées (12 - 12' et 13 - 13'), la première ayant une partie courbe (4) unie par une partie sensiblement droite (5) et l'extrémité de cette partie droite étant reliée à la bande mentionnée afin de former la boucle fermée. Un écrou (6) monté par frottement à l'intérieur de cette première boucle, cet écrou ayant une collerette circulaire allongée (7), la courbure de la collerette circulaire (7) correspond à la courbure de la partie courbe citée (4) dans l'intérieur de la première boucle et est contiguë à la courbure interne de la première boucle, des moyens contraignants comme un vis rentré (9) qui passe à travers des orifices alignés (12' - 13') de la seconde boucle et qui est rentré dans l'écrou (6), de ce fait, le vis (9), en rentrant dans cet écrou (6) tire sur la collerette (7) et de façon contiguë à la partie courbe (4) de la première boucle vers la seconde pour serrer le collier. Cela est possible parce que l'écrou a une pièce tubulaire cylindrique avec filetage interne et une circonférence continue, cette pièce tubulaire sort à travers la rainure intérieure (12 - 12') et la collerette sort (7) par une extrémité de cette pièce tubulaire, un angle aigu existant entre cette partie courbe (4) et la partie droite mentionnée (5).

2. Un collier selon la revendication 1, caractérisé car la seconde boucle fermée est de même fabrication que la première boucle et qui a une seconde partie droite (5), le vis fileté (9) mentionné ayant une collerette (7) contiguë à cette partie droite (5) afin de serrer le collier.

3. Un collier selon la revendication 1, caractérisé par le fait que cette seconde boucle fermée (15) est de forme légèrement circulaire, un tube circulaire (16) rotatoire, rentré dans cette seconde boucle fermée, ce tube (16) ayant une paire de parties entrantes alignées (18) qui correspondent aux parties entrantes et saillantes alignées mentionnées, une pièce-union (14) qui s'étend sur l'espace entre la première et la seconde boucles fermées, cette pièce-union (14) étant unie de façon pivotante au tube (16) par lequel, quand on rentre le vis de filetage (9) à travers les orifices alignés (12' - 13') dans la seconde boucle et à travers ces orifices alignés dans le tube et se vissent sur la pièce tubulaire, ces boucles se rapprochent pendant que la pièce-union (14) pivote jusqu'à obtenir une position où elle serre en sens perpendiculaire sur la zone arquée du tube du collier.

4. Un collier selon la revendication 3, caractérisé parce que cette pièce-union (14) est de forme arquée.

5. Un collier selon la revendication 4, caractérisé parce que cette pièce-union (14) se monte de façon pivotante sur le tube mentionné (16) au moyen de pièces entrantes (17) qui sortent des extrémités du tube et des orifices (18) dont cette pièce-union est pourvue.

6. Un collier selon la revendication 4, caractérisé parce que cette pièce-union (14) se monte de façon pivotante sur le tube mentionné au moyen d'encoches pivots sortant des latéraux de cet élément d'union et des orifices entrants dans les extrémités du tube.

Fig. 4

Fig. 3

Fig. 1

Fig. 2

14

15'

15

14

17'

16

*Fig. 5*

3

Fig. 6

Fig. 7

Fig. 8

Fig. 9